# EUROPÄISCHE PATENTSCHRIFT

(11) **EP 1 134 367 B1**
(45) Veröffentlichungstag und Bekanntmachung des Hinweises auf die Patenterteilung: **10.08.2005**
(21) Anmeldenummer: 01250017.9
(22) Anmeldetag: 12.01.2001
(51) Int. Cl.: F01N 3/04, F01N 3/20, F01N 5/02

(54) **Abgasreinigungsanlage einer Verbrennungskraftmaschine mit einer Abgaskühlung und Verfahren zum Betrieb der Abgasreinigungsanlage**
Exhaust gas purification installation of an internal combustion engine with exhaust cooling and process for using the exhaust gas purification installation
Installation de purification de gaz d'échappement d'un moteur à combustion interne avec refroidissement de gaz d'échappement et procédé d'utilisation de l'installation de purification de gaz d'échappement

(30) Priorität: 15.03.2000 DE 10012432
(43) Veröffentlichungstag der Anmeldung: 19.09.2001
(73) Patentinhaber: Volkswagen Aktiengesellschaft, 38436 Wolfsburg (DE)
(72) Erfinder: Pott, Ekkehard, Dr., 38518 Gifhorn (DE); Zillmer, Michael, 38173 Sickte (DE); Arens, Günter, 38518 Gifhorn (DE)
(74) Vertreter: Schneider, Henry, Dipl.-Ing.

(56) Entgegenhaltungen:
- FR-A- 2 755 727
- US-A- 3 050 935
- US-A- 5 894 834
- PATENT ABSTRACTS OF JAPAN vol. 017, no. 346 (M-1437), 30. Juni 1993 (1993-06-30) & JP 05 044445 A (MITSUBISHI HEAVY IND LTD), 23. Februar 1993 (1993-02-23)

## Beschreibung

Die Erfindung betrifft eine Abgasreinigungsanlage einer Verbrennungskraftmaschine mit einer Abgaskühlung und ein Verfahren zum Betrieb der Abgasreinigungsanlage mit den in den unabhängigen Ansprüchen genannten Merkmalen.

Abgasreinigungsanlagen für Verbrennungskraftmaschinen gehören seit langem zum Stand der Technik. Dabei wird ein Abgas, das während eines Verbrennungsvorganges eines Luft-Kraftstoff-Gemisches in der Verbrennungskraftmaschine entsteht, zur Reinigung durch im Abgasstrang angeordnete Komponenten geleitet. Diese Komponenten umfassen beispielsweise Partikelfilter oder Katalysatoren. Mit Hilfe der Katalysatoren können einerseits oxidative Konvertierungsreaktionen, wie beispielsweise die Umsetzung von Kohlenmonoxid zu Kohlendioxid, unterstützt werden und andererseits reduktive Prozesse, wie eine Reduktion von Stickoxiden NO_{X}, beschleunigt werden. Für letzteren Prozess eignen sich insbesondere sogenannte NO_{X}-Speicherkatalysatoren, die zusätzlich ein Speichermedium aufweisen, das in bestimmten Betriebszuständen NO_{X} absorbiert. Gemeinsam ist allen diesen Komponenten, dass sie für einen optimalen Betrieb jeweils in einem bestimmten Temperaturfenster betrieben werden müssen.

In bestimmten Betriebssituationen weist das von der Verbrennungskraftmaschine emittierte Abgas Temperaturen oberhalb der optimalen Betriebstemperaturen der Komponenten auf. Um einen direkten Eingriff in eine Steuerung der Verbrennungskraftmaschine zu vermeiden, ist es beispielsweise aus der DE 44 10 022 A1 bekannt, dem Katalysator einen Wärmeaustauscher vorzuschalten. Eine solche Abgaskühlung umfasst einen Kühler, in dem ein über einen Kühlmittelkreislauf vom Wärmeaustauscher transferiertes Kühlmittel wieder abgekühlt werden kann. Nach der in der DE 44 10 022 A1 gefundenen Lösung kann dieser Kühler gleichzeitig Teil eines Motorkühlsystems sein. Nachteilig an der aufgezeigten Anordnung ist jedoch, dass es beim Betrieb der Verbrennungskraftmaschine zu Betriebssituationen kommen kann, in denen eine Abgasbehandlung unabhängig vom Motorkühlsystem erwünscht ist. So kann beispielsweise eine Motordrehzahl so niedrig sein, dass eine Wasserpumpe des Motorkühlsystems nur mit einem niedrigen Kühlmittel-Förderstrom arbeitet. Unter Umständen ist aber die Abgastemperatur für einen optimalen Betrieb der Komponenten nicht mehr geeignet und müsste gekühlt werden. Nachteilig ist weiterhin, dass bei dem aufgezeigten, einflutigen Abgasstrang bei sehr hohen Abgastemperaturen auch ein Kühlmittel innerhalb des Wärmeaustauschers verdampft werden kann, wodurch es zu einer Schädigung des gesamten Motorkühlsystems kommen kann. Ferner kann der Wärmeaustauscher in Betriebssituationen mit sehr hohen Abgasgegendrücken beschädigt werden.

Aus der DE 39 18 597 A1 ist es bekannt, einen Wärmespeicher in einem Bypass des Abgasstranges anzuordnen. Durch Drosselklappen wird ein Abgasmassenstrom entsprechend der Betriebssituation der Verbrennungskraftmaschine umgelenkt, so dass in bestimmten Betriebssituationen die Durchströmung des Bypasses verhindert werden kann. Die aufgezeigte Lösung ist allerdings technisch aufwendig, da sie einen separaten Kühlmittelkreislauf erfordert.

Aus FR 2755727 A1 ist eine Abgasreinigungsanlage bekannt, bei der in einem unmittelbar hinter einem Krümmer der Verbrennungskraftmaschine angeordneter Seitenarm des Angaskanals ein Wärmeaustauscher angeordnet ist, der direkt mit dem Motorkühlkreislauf verbunden ist. In Abhängigkeit von der Abgastemperatur wird das Abgas mittels einer stellbaren Klappe durch den Seitenarm geleitet oder unter Umgehung desselben direkt durch den Abgaskanal.

Aufgabe der vorliegenden Erfindung ist es, eine Abgasreinigungsanlage mit einer Abgaskühlung und ein Verfahren zum Betrieb einer solchen Anlage zur Verfügung zu stellen, mit denen die Nachteile des Standes der Technik überwunden werden können. Die aufgezeigte Lösung soll nach Möglichkeit auf bestehende Fahrzeugkomponenten zurückgreifen, um eine möglichst kostengünstige und platzsparende Realisierung zu ermöglichen. Weiterhin soll eine hohe Flexibilität der Abgaskühlung hinsichtlich möglicher Betriebssituationen der Verbrennungskraftmaschine gewährt werden.

Erfindungsgemäß wird diese Aufgabe durch die Abgasreinigungsanlage und das Verfahren zum Betrieb der Abgasreinigungsanlage mit den unabhängigen Ansprüchen genannten Merkmalen gelöst. Die Abgasreinigungsanlage besteht dabei aus
(a) einer Abgaskühlung, umfassend einen vom Abgas durchströmbaren Wärmeaustauscher, der in einem Bypass eines Abgasstranges angeordnet ist, wobei ein Abgasmassenstrom durch den Bypass mittels im Abgasstrang vorhandener Schaltmittel regelbar ist,
(b) einem Motorkühlsystem mit einem Kühlmittelkreislauf, einer Pumpe sowie einem integrierten Kühler und
(c) einen weiteren für flüssige Kühlmittel geeigneten Kühlmittelkreislauf mit einer im Fördervolumen regelbaren Zusatzpumpe, wobei über den weiteren Kühlmittelkreislauf der Wärmeaustauscher der Abgaskühlung mit dem Kühler des Motorkühlsystems verbunden ist.

Nach dem Verfahren wird das Fördervolumen und/oder eine Förderrichtung in Abhängigkeit von einer Kühlmitteltemperatur und/oder einer Abgastemperatur und/oder einer Temperatur weiterer Komponenten der Abgasreinigungsanlage geregelt.

In einer bevorzugten Ausgestaltung des Verfahrens wird die Zusatzpumpe in Phasen, in denen eine Pumpe des Motorkühlsystems einen vorbestimmbaren Mindestförderstrom unterschreitet, aktiviert. Und zwar insbesondere dann, wenn die Abgastemperatur eine Mindesttemperatur übersteigt. So kann sichergestellt werden, dass beispielsweise in der Startphase der Verbrennungskraftmaschine schnell die notwendige Betriebstemperatur erreicht werden kann, aber gleichzeitig auch bei hohen Abgastemperaturen eine Kühlung des Abgases möglich ist.

Weiterhin wird in einer bevorzugten Ausgestaltung des Verfahrens bei steigender Kühlmitteltemperatur und/oder Abgastemperatur und/oder Temperatur weiterer Komponenten der Abgasreinigungsanlage das Fördervolumen der Zusatzpumpe erhöht. Die aufgezeigte Regelung der Zusatzpumpe kann anhand von Signalen einer herkömmlichen Temperatursensorik durchgeführt werden. Dazu können beispielsweise im Abgasstrang im Bereich der Katalysatoren oder aber auch im Kühlmittelkreislauf entsprechende Temperaturfühler angeordnet werden. Eine Steigerung des Fördervolumens kann - sofern eine ausreichende Abkühlung des Kühlmittels in nachgeordneten Bauteilen der Abgaskühlung gewährleistet ist - zu einer verstärkten Abkühlung des Abgases führen, so dass ein optimaler Temperaturbereich für den Betrieb der Komponenten der Abgasreinigungsanlage eingestellt werden kann.

Weiterhin ist bevorzugt, einen Zusatzkühler zwischen dem Wärmeaustauscher und dem Kühler des Motorkühlsystems zu schalten. In bevorzugter Weise ist der Zusatzkühler in seiner Kühlleistung regelbar, beispielsweise indem ein Kühlluftförderstrom eines zugeordneten Gebläses beeinflusst wird. Die Kühlleistung kann dann in Abhängigkeit von der Kühlmitteltemperatur geregelt werden, so dass insbesondere bei steigender Kühlmitteltemperatur die Kühlleistung erhöht wird.

Ferner ist bevorzugt, die im Abgasstrang vorhandenen Schaltmittel zur Umlenkung des Abgasmassenstromes in Abhängigkeit von der Kühlmitteltemperatur und/oder der Abgastemperatur und/oder der Temperatur weiterer Komponenten der Abgasreinigungsanlage zu betätigen. Auf diese Weise kann ein Durchströmen des Wärmeaustauschers in möglicherweise schädigenden Betriebssituationen der Verbrennungskraftmaschine vermieden werden.

Eine weitere bevorzugte Ausgestaltung des Verfahrens sieht vor, dass die Förderrichtung der Zusatzpumpe für den Fall, dass das Abgas beheizt werden soll, so bestimmt wird, dass das Kühlmittel vor der Verbrennungskraftmaschine über den Wärmetauscher zum Kühler fließt. Dabei wird vorzugsweise das Abgas beheizt, wenn die Abgastemperatur und/oder die Temperatur der weiteren Komponenten der Abgasreinigungsanlage unterhalb vorgegebener Schwellentemperaturen liegt. Demnach besteht die Möglichkeit, ein verbessertes Wärmemanagement der Abgasreinigungsanlage zu erreichen, die für einen optimalen Betrieb in bestimmten Temperaturbereichen arbeiten muss.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand einer Zeichnung näher erläutert.

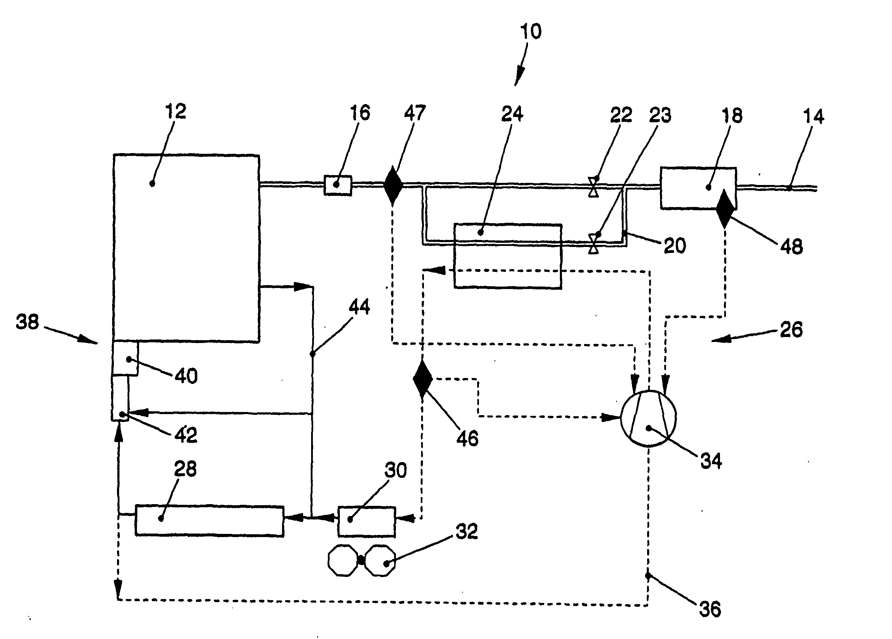

Die einzige Figur zeigt eine Prinzipschaltung einer Abgasreinigungsanlage 10 für eine Verbrennungskraftmaschine 12. Die Abgasreinigungsanlage 10 ist in einem Abgasstrang 14 der Verbrennungskraftmaschine 12 untergebracht und umfasst Komponenten, wie einen Vorkatalysator 16 und einen NOₓ-Speicherkatalysator 18. Weiterhin ist der Abgasstrang 14 in einem Teilbereich zweiflutig, das heißt, er weist einen Bypass 20 auf. Über die Schaltmittel 22, 23 lässt sich ein Abgasmassenstrom in noch näher zu erläuternder Weise umlenken.

Ein optimaler Betrieb des NOₓ-Speicherkatalysators 18 ist stark temperaturabhängig. So ist einerseits für die Speicherkomponente eine Mindesttemperatur erforderlich, ab der überhaupt erst eine ausreichende Absorption von durch die Verbrennungskraftmaschine 12 emittierten Stickoxiden NO_{X} ermöglicht wird. Oberhalb einer Desorptionstemperatur wird jedoch das eingelagerte NO_{X} wieder schlagartig desorbiert. Auch die Katalysatorkomponente des NO_{X}-Speicherkatalysators 18 erlaubt mit Hinsicht auf eine möglichst hohe Konvertierungsrate nur einen Betrieb in einem beschränkten Temperaturbereich. Einerseits muss eine Mindestaktivitätstemperatur überschritten werden und andererseits kann eine zu hohe Temperatur zu einer thermischen Schädigung des NO_{X}-Speicherkatalysators 18 führen. Im Normalbetrieb muss demnach ein Kompromiss zwischen den optimalen Betriebstemperaturen der Speicherkomponenten und der Katalysatorkomponente gefunden werden. Daneben kann es unter bestimmten Umständen erforderlich sein, die Betriebstemperaturen hiervon abweichend zu wählen. Ohne an dieser Stelle darauf näher einzugehen, kann beispielsweise bei einer Entschwefelung des NO_{X}-Speicherkatalysators 18 eine wesentlich höhere Temperatur erforderlich sein. Demnach wird klar, dass nach Möglichkeit eine Abgastemperatur beeinflusst werden muss, um den optimalen Betrieb der Abgasreinigungsanlage 10 zu gewähren.

Im Bereich des Bypasses 20 ist zur Kühlung des Abgases ein Wärmeaustauscher 24 als Teil einer Abgaskühlung 26 angeordnet. Der Wärmeaustauscher 24 wird von dem Abgas durchströmt, sofern das Schaltmittel 23 in einer geöffneten Stellung verharrt. Der Wärmeaustauscher 24 wird von einem flüssigen Kühlmittel durchströmt, das entsprechend einer Fließgeschwindigkeit und einer Temperaturdifferenz zum Abgas eine berechenbare Wärmemenge dem Abgas entzieht beziehungsweise an das Abgas abgibt.

Die Abgaskühlung 26 umfasst ferner einen Kühler 28 sowie einen Zusatzkühler 30 mit Gebläse 32. Weiterhin ist eine Zusatzpumpe 34 in einen Kühlmittelkreislauf 36 integriert.

Der Kühler 28 ist Teil eines Motorkühlsystems 38, das aus einer Wasserpumpe 40, einem Thermostaten 42 und einem Kühlmittelkreislauf 44 besteht. Das Motorkühlsystem 38 wird in bekannter Weise zur Regulierung einer Motortemperatur der Verbrennungskraftmaschine 12 genutzt, wobei nun zusätzlich die Abgaskühlung 26 im Bereich des Kühlers 28 mit dem Motorkühlsystem 38 in Verbindung steht. Der Kühlmittelkreislauf 36 mündet in den Kühlmittelkreislauf 44, wobei Ab- und Zufluss durch den Kühler 28 getrennt werden.

Die Zusatzpumpe 34 kann als eine Elektropumpe ausgelegt werden und ist in ihrem Fördervolumen und/oder ihrer Förderrichtung regelbar. Als Führungsgrößen zur Regelung des Fördervolumens und der Förderrichtung der Zusatzpumpe 34 können eine Kühlmitteltemperatur und/oder eine Abgastemperatur und/oder eine Temperatur des NO_{X}-Speicherkatalysators 18 dienen. Diese Temperaturen können durch eine entsprechende Sensorik mittels der schematisch dargestellten Temperaturfühler 46, 47, 48 erfasst werden und an eine hier nicht dargestellte Steuereinheit für die Zusatzpumpe 34 übermittelt werden. In der Steuereinheit ist eine Prozedur in digitalisierter Form hinterlegt, die in Abhängigkeit von den erfassten Temperaturen der Zusatzpumpe 34 ein einzustellendes Fördervolumen beziehungsweise eine einzustellende Förderrichtung vorgibt. Durch die aufgezeigte Anordnung kann der Betrieb der Abgasreinigungsanlage 10 beispielhaft in folgenden Betriebssituationen optimiert werden:

Bei niedrigen Motordrehzahlen arbeitet die üblicherweise motordrehzahlsynchron angetriebene Wasserpumpe 40 nur mit einem niedrigen Kühlmittel-Förderstrom im Kühlmittelkreislauf 44. Da jedoch das Abgas der Verbrennungskraftmaschine 12 höhere Temperaturen erreichen kann, ist es unter Umständen notwendig, dieses zu kühlen. Dazu werden die Schaltmittel 22, 23 derart gestellt, dass der Abgasmassenstrom durch den Wärmeaustauscher 24 geleitet wird. Weiterhin wird die Zusatzpumpe 34 aktiviert, die dann den Kühlmittel-Förderstrom innerhalb des Kühlmittelkreislaufes 36 steigert. Eine solche Vorgehensweise kann zusätzlich davon abhängig gemacht werden, ob die Abgastemperatur eine vorgegebene Mindesttemperatur übersteigt.

Liegt die Abgastemperatur und/oder die Temperatur der Komponenten der Abgasreinigungsanlage 10 noch unterhalb vorgegebener Schwellenwerte für einen optimalen Betrieb, so wird die Förderrichtung der Zusatzpumpe 34 so bestimmt, dass ein Abgriff des Kühlmittels vor dem Kühler 28 stattfindet. Wenn die Kühlmitteltemperatur noch oberhalb der des Abgases liegt, kann dieses somit beheizt werden. Zur Kühlung kann dann anschließend die Förderrichtung der Zusatzpumpe 34 wieder reversiert werden.

Ist der Wärmeeintrag im Bereich des Wärmeaustauschers 24 aufgrund hoher Abgastemperaturen sehr hoch, so kann es sinnvoll sein, die Kühlung durch Zuschaltung des Zusatzkühlers 30 zu verstärken. Eine Kühlleistung des Zusatzkühlers 30 kann durch geeignete Regelung eines Kühlluftförderstromes des zugeordneten Gebläses 32 variiert werden und von der durch den Temperaturfühler 46 erfassten Kühlmitteltemperatur abhängig gemacht werden.

Steigt die Temperatur im Bereich des Abgasstranges 14 weiter an oder ist eine Abkühlung des Abgases aufgrund besonderer Betriebssituation, wie zum Beispiel einer Entschwefelung des NOₓ-Speicherkatalysators 18, nicht erwünscht, so wird über das Schaltmittel 23 der Bypass 20 geschlossen. Auf diese Weise kann eine Überhitzung des Wärmeaustauschers 24 vermieden werden.

### BEZUGSZEICHENLISTE

- 10: Abgasreinigungsanlage
- 12: Verbrennungskraftmaschine
- 14: Abgasstrang
- 16: Vorkatalysator
- 18: NOₓ-Speicherkatalysator
- 20: Bypass
- 22: Schaltmittel
- 23: Schaltmittel
- 24: Wärmeaustauscher
- 26: Abgaskühlung
- 28: Kühler
- 30: Zusatzkühler
- 32: Gebläse
- 34: Zusatzpumpe
- 36: Kühlmittelkreislauf
- 38: Motorkühlsystem
- 40: Wasserpumpe
- 42: Thermostat
- 44: Kühlmittelkreislauf
- 46: Temperaturfühler
- 47: Temperaturfühler
- 48: Temperaturfühler

## Patentansprüche

1. Abgasreinigungsanlage (10) einer Verbrennungskraftmaschine (12) mit
(a) einer Abgaskühlung (26), umfassend einen vom Abgas durchströmbaren Wärmeaustauscher (24), der in einem Bypass (20) eines Abgasstranges (14) angeordnet ist, wobei ein Abgasmassenstrom durch den Bypass (20) mittels im Abgasstrang (14) vorhandener Schaltmittel (22, 23) regelbar ist, und
(b) einem Motorkühlsystem (38) mit einem Kühlmittelkreislauf (44), einer Pumpe (40) sowie einem integrierten Kühler (28),
**gekennzeichnet durch**
(c) einen weiteren für flüssige Kühlmittel geeigneten Kühlmittelkreislauf (36) mit einer im Fördervolumen regelbaren Zusatzpumpe (34), wobei über den weiteren Kühlmittelkreislauf (36) der Wärmeaustauscher (24) der Abgaskühlung (26) mit dem Kühler (28) des Motorkühlsystems (38) verbunden ist.

2. Abgasreinigungsanlage (10) nach Anspruch 1, **dadurch gekennzeichnet, dass** das Fördervolumen und/oder die Förderrichtung der Zusatzpumpe (34) in Abhängigkeit von einer Kühlmitteltemperatur und/oder einer Abgastemperatur und/oder einer Temperatur weiterer Komponenten der Abgasreinigungsanlage (10) geregelt ist.

3. Abgasreinigungsanlage (10) nach Anspruch 2, **dadurch gekennzeichnet, dass** die weiteren Komponenten Katalysatoren, insbesondere einen NOₓ-Speicherkatalysator (18), umfassen.

4. Abgasreinigungsanlage (10) nach einem der vorhergehenden Ansprüche, **dadurch gekennzeichnet, dass** ein Zusatzkühler (30) zwischen dem Wärmeaustauscher (24) und dem Kühler (28) des Motorkühlsystems (38) geschaltet ist.

5. Abgasreinigungsanlage (10) nach Anspruch 4, **dadurch gekennzeichnet, dass** eine Kühlleistung des Zusatzkühlers (30), insbesondere über ein zugeordnetes Gebläse (32), regelbar ist.

6. Verfahren zum Betrieb einer Abgasreinigungsanlage (10) für eine Verbrennungskraftmaschine (12), umfassend eine Abgaskühlung (26) mit einem vom Abgas durchströmbaren Wärmeaustauscher (24) und ein Motorkühlsystem (38) mit einem Kühlmittelkreislauf (44), einer Pumpe (40) sowie einem integrierten Kühler (28), **gekennzeichnet durch** einen weiteren für flüssige Kühlmittel geeigneten Kühlmittelkreislauf (36), der mit dem Wärmeaustauscher (24) der Abgaskühlung (26) und dem Kühler (28) des Motorkühlsystems (38) verbunden ist, wobei in Abhängigkeit von einer Kühlmitteltemperatur und/oder einer Abgastemperatur und/oder einer Temperatur weiterer Komponenten der Abgasreinigungsanlage (10) ein Fördervolumen und/oder eine Förderrichtung einer in den weiteren Kühlmittelkreislauf (36) integrierten Zusatzpumpe (34) geregelt wird.

7. Verfahren nach Anspruch 6, **dadurch gekennzeichnet, dass** die Zusatzpumpe (34) in Phasen, in denen eine Pumpe (40) des Motorkühlsystems (38) einen vorbestimmbaren Mindestförderstrom unterschreitet, aktiviert wird.

8. Verfahren nach Anspruch 7, **dadurch gekennzeichnet, dass** die Zusatzpumpe (34) nur dann aktiviert wird, wenn die Abgastemperatur eine Mindesttemperatur übersteigt.

9. Verfahren nach einem der Ansprüche 6 bis 8, **dadurch gekennzeichnet, dass** ein Zusatzkühler (30) mit Gebläse (32) zwischen dem Wärmeaustauscher (24) und dem Kühler (28) geschaltet ist und eine Kühlleistung des Zusatzkühlers (30) durch das Gebläse (32) in Abhängigkeit von der Kühlmitteltemperatur geregelt wird.

10. Verfahren nach Anspruch 9, **dadurch gekennzeichnet, dass** der Kühlluftförderstrom erhöht wird mit steigender Kühlmitteltemperatur.

11. Verfahren nach einem der Ansprüche 6 bis 10, **dadurch gekennzeichnet, dass** bei steigender Kühlmitteltemperatur und/oder Abgastemperatur und/oder Temperatur weiterer Komponenten der Abgasreinigungsanlage (10) das Fördervolumen der Zusatzpumpe (34) erhöht wird.

12. Verfahren nach einem der Ansprüche 6 bis 11, **dadurch gekennzeichnet, dass** der Wärmeaustauscher (24) in einem Bypass (20) eines Abgasstranges (14) angeordnet wird, wobei ein Abgasstrom durch den Bypass (20) mittels im Abgasstrang (14) vorhandener Schaltmittel (22, 23) in Abhängigkeit von der Kühlmitteltemperatur und/oder Abgastemperatur und/oder Temperatur weiterer Komponenten der Abgasreinigungsanlage (10) geregelt wird.

13. Verfahren nach einem der Ansprüche 6 bis 12, **dadurch gekennzeichnet, dass** die Förderrichtung der Zusatzpumpe (34) für den Fall, dass das Abgas beheizt werden soll, so bestimmt wird, dass das Kühlmittel von der Verbrennungskraftmaschine (12) über den Wärmetauscher (24) zum Kühler (28) fließt.

14. Verfahren nach Anspruch 13, **dadurch gekennzeichnet, dass** das Abgas beheizt wird, wenn die Abgastemperatur und/oder die Temperatur der weiteren Komponenten der Abgasreinigungsanlage (10) unterhalb vorgegebener Schwellentemperaturen fällt.

## Claims

1. Exhaust-gas cleaning system (10) of a combustion engine (12) comprising
(a) an exhaust-gas cooling system (26), comprising a heat exchanger (24), through which the exhaust-gas can flow, and which is arranged in a bypass (20) of an exhaust-gas duct (14), wherein an exhaust-gas mass flow through the bypass (20) can be controlled by means of switching elements (22, 23) provided in the exhaust-gas duct (14), and
(b) an engine-cooling system (38) with a cooling-medium circuit (44), a pump (40) and an integrated cooler (28),
**characterised by**
(c) a further cooling-medium circuit (36) suitable for liquid cooling media and with a supplementary pump (34) with a controllable pumping volume, wherein the heat exchanger (24) of the exhaust-gas cooling system (26) is connected to the cooler (28) of the engine-cooling system (38) via the further cooling-medium circuit (36).

2. Exhaust-gas cleaning system (10) according to claim 1, **characterised in that** the pumping volume and/or the pumping direction of the supplementary pump (34) is controlled in dependence upon a cooling-medium temperature and/or an exhaust-gas temperature and/or a temperature of other components of the exhaust-gas cleaning system (10).

3. Exhaust-gas cleaning system (10) according to claim 2, **characterised in that** the other components comprise catalysts, in particular, an NOₓ storage catalyst (18).

4. Exhaust-gas cleaning system (10) according to any one of the preceding claims, **characterised in that** a supplementary cooler (30) is connected between the heat exchanger (24) and the cooler (28) of the engine-cooling system (38).

5. Exhaust-gas cleaning system (10) according to claim 4, **characterised in that** a cooling output of the supplementary cooler (30) can be controlled, in particular, via an associated fan (32).

6. Method for the operation of an exhaust-gas cleaning system (10) for a combustion engine (12), comprising an exhaust-gas cooling system (26) with a heat exchanger (24), through which the exhaust-gas can flow, and an engine-cooling system (38) with a cooling-medium circuit (44), a pump (40) and an integrated cooler (28), **characterised by** a further cooling-medium circuit (36) suitable for liquid cooling media, which is connected to the heat exchanger (24) of the exhaust-gas cooling system (26) and with the cooler (28) of the engine-cooling system (38), wherein a pumping volume and/or a pumping direction of a supplementary pump (34) integrated in the further cooling-medium circuit (36) is controlled in dependence upon a cooling-medium temperature and/or an exhaust-gas temperature and/or a temperature of other components of the exhaust-gas cleaning system (10).

7. Method according to claim 6, **characterised in that** the supplementary pump (34) is activated in phases, in which a pump (40) of the engine-cooling system (38) falls below a predeterminable minimum pumping flow.

8. Method according to claim 7, **characterised in that** the supplementary pump (34) is only activated, when the exhaust-gas temperature exceeds a minimum temperature.

9. Method according to any one of claims 6 to 8, **characterised in that** a supplementary cooler (30) with fan (32) is connected between the heat exchanger (24) and the cooler (28), and that a cooling output of the supplementary cooler (30) is controlled by the fan (32) in dependence upon the cooling-medium temperature.

10. Method according to claim 9, **characterised in that** the flow of pumped cooling air is increased as the temperature of the cooling medium rises.

11. Method according to any one of claims 6 to 10, **characterised in that** the pumping volume of the supplementary pump (34) is increased with a rising cooling-medium temperature and/or exhaust-gas temperature and/or temperature of other components of the exhaust-gas cleaning system (10).

12. Method according to any one of claims 6 to 11, **characterised in that** the heat exchanger (24) is disposed in a bypass (20) of an exhaust-gas duct (14), wherein an exhaust-gas flow through the bypass (20) is controlled in dependence upon the cooling-medium temperature and/or exhaust-gas temperature and/or temperature of further components of the exhaust-gas cleaning system (10) by means of switching elements (22, 23) provided in the exhaust-gas duct (24).

13. Method according to any one of claims 6 to 12, **characterised in that**, if the exhaust-gas is to be heated, the pumping direction of the supplementary pump (34) is determined in such a manner that the cooling medium flows from the combustion engine (12) via the heat exchanger (24) to the cooler (28).

14. Method according to claim 13, **characterised in that** the exhaust-gas is heated, when the exhaust-gas temperature and/or the temperature of the other components of the exhaust-gas cleaning system (10) falls below predetermined threshold temperatures.

## Revendications

1. Installation d'épuration (10) de gaz d'échappement d'un moteur à combustion interne (12), avec
(a) un refroidissement (26) de gaz d'échappement, comportant un échangeur de chaleur (24) pouvant être traversé par les gaz d'échappement, qui est disposé dans un by-pass (20) d'un tuyau (14) de gaz d'échappement, un débit massique de gaz d'échappement traversant le by-pass (20) pouvant être réglé à l'aide de moyens de commutation (22, 23) prévus dans le tuyau (14) de gaz d'échappement, et
(b) un système de refroidissement (38) de moteur, comportant un circuit de moyen de refroidissement (44), une pompe (40) ainsi qu'un refroidisseur (28) intégré,
**caractérisée par**
(c) un autre circuit de moyen de refroidissement (36) approprié pour des moyens de refroidissement liquides, comportant une pompe auxiliaire (34) dont le volume de refoulement est réglable, l'échangeur de chaleur (24) du refroidissement (26) de gaz d'échappement étant relié au refroidisseur (28) du système de refroidissement (38) de moteur par l'intermédiaire de l'autre circuit de moyen de refroidissement (36).

2. Installation d'épuration (10) de gaz d'échappement selon la revendication 1, **caractérisée en ce que** le volume de refoulement et/ou le sens de refoulement de la pompe auxiliaire (34) sont réglés en fonction d'une température de moyen de refroidissement et/ou d'une température de gaz d'échappement et/ou d'une température d'autres composants de l'installation d'épuration (10) de gaz d'échappement.

3. Installation d'épuration (10) de gaz d'échappement selon la revendication 2, **caractérisée en ce que** les autres composants sont des catalyseurs, notamment un catalyseur à accumulation de NOₓ (18).

4. Installation d'épuration (10) de gaz d'échappement selon l'une des revendications précédentes, **caractérisée en ce qu'**un refroidisseur auxiliaire (30) est disposé entre l'échangeur de chaleur (24) et le refroidisseur (28) du système de refroidissement (38) de moteur.

5. Installation d'épuration (10) de gaz d'échappement selon la revendication 4, **caractérisée en ce qu'**une puissance de refroidissement du refroidisseur auxiliaire (30) est réglable, notamment par l'intermédiaire d'un ventilateur (32) associé.

6. Procédé destiné au fonctionnement d'une installation d'épuration (10) de gaz d'échappement d'un moteur à combustion interne (12), comportant un refroidissement (26) de gaz d'échappement avec un échangeur de chaleur (24) pouvant être traversé par les gaz d'échappement, et un système de refroidissement (38) de moteur avec un circuit de moyen de refroidissement (44), une pompe (40) ainsi qu'un refroidisseur (28) intégré, **caractérisé par** un autre circuit de moyen de refroidissement (36) approprié pour des moyens de refroidissement liquides, qui est relié à l'échangeur de chaleur (24) du refroidissement (26) de gaz d'échappement et au refroidisseur (28) du système de refroidissement (38) de moteur, un volume de refoulement et/ou un sens de refoulement d'une pompe auxiliaire (34) intégrée dans l'autre circuit de moyen de refroidissement (36) étant réglés en fonction d'une température de moyen de refroidissement et/ou d'une température de gaz d'échappement et/ou d'une température d'autres composants de l'installation d'épuration (10) de gaz d'échappement.

7. Procédé selon la revendication 6, **caractérisé en ce que** la pompe auxiliaire (34) est activée dans des phases dans lesquelles une pompe (40) du système de refroidissement (38) de moteur n'atteint pas un débit de refoulement minimal prédéterminé.

8. Procédé selon la revendication 7, **caractérisé en ce que** la pompe auxiliaire (34) n'est activée que lorsque la température des gaz d'échappement dépasse une température minimale.

9. Procédé selon l'une des revendications 6 à 8, **caractérisé en ce qu'**un refroidisseur auxiliaire (30) avec un ventilateur (32) est disposé entre l'échangeur de chaleur (24) et le refroidisseur (28), et **en ce qu'**une puissance de refroidissement du refroidisseur auxiliaire (30) est réglée par le ventilateur (32) en fonction de la température du moyen de refroidissement.

10. Procédé selon la revendication 9, **caractérisé en ce que** le débit d'air de refroidissement est augmenté avec l'augmentation de la température du moyen de refroidissement.

11. Procédé selon l'une des revendications 6 à 10, **caractérisé en ce que** le volume de refoulement de la pompe auxiliaire (34) est augmenté lors de l'augmentation de la température du moyen de refroidissement et/ou de la température des gaz d'échappement et/ou de la température d'autres composants de l'installation d'épuration (10) de gaz d'échappement.

12. Procédé selon l'une des revendications 6 à 11, **caractérisé en ce que** l'échangeur de chaleur (24) est disposé dans un by-pass (20) d'un tuyau (14) de gaz d'échappement, un débit de gaz d'échappement traversant le by-pass (20) étant réglé à l'aide de moyens de commutation (22, 23) prévus dans le tuyau (14) de gaz d'échappement en fonction de la température du moyen de refroidissement et/ou de la température des gaz d'échappement et/ou de la température d'autres composants de l'installation d'épuration (10) de gaz d'échappement.

13. Procédé selon l'une des revendications 6 à 12, **caractérisé en ce que**, dans le cas où les gaz d'échappement doivent être chauffés, le sens de refoulement de la pompe auxiliaire (34) est défini de telle sorte que le moyen de refroidissement s'écoule du moteur à combustion interne (12) par l'intermédiaire de l'échangeur de chaleur (24) vers le refroidisseur (28).

14. Procédé selon la revendication 13, **caractérisé en ce que** les gaz d'échappement sont chauffés lorsque la température des gaz d'échappement et/ou la température des autres composants de l'installation d'épuration (10) de gaz d'échappement tombent au-dessous de températures de seuil prédéterminées.
